# EUROPÄISCHE PATENTANMELDUNG

(11) **EP 3 222 371 A1**
(43) Veröffentlichungstag der Anmeldung: **27.09.2017**
(21) Anmeldenummer: 16162212.1
(22) Anmeldetag: 24.03.2016
(51) Int. Cl.: B22F 3/105, B28B 1/00, B29C 67/00

(54) **VERFAHREN ZUM ADDITIVEN HERSTELLEN EINES BAUTEILS MIT MEHREREN BAUMATERIALIEN**

(71) Anmelder: Siemens Aktiengesellschaft, 80333 München (DE)
(72) Erfinder: Heinze, Christoph, 10365 Berlin (DE); Reiche, Ralph, 13465 Berlin (DE)

(57) **Zusammenfassung**

Die Erfindung betrifft ein Verfahren zum additiven Herstellen eines Bauteils. Bei diesem Verfahren wird Lage (31) für Lage (31) Baumaterial (19a, 19b, 19c) aufgetragen und anschließend beispielsweise mittels eines Laserstrahls verfestigt, insbesondere aufgeschmolzen. Hierbei kommen unterschiedliche Baumaterialien zum Einsatz. Erfindungsgemäß ist vorgesehen, dass durch die unterschiedlichen Baumaterialien (19a, 19b, 19c) das Bauteil mit zwei Teilvolumina (23a, 23b) hergestellt wird, wobei diese Teilvolumina (23a, 23b) durch eine Diffusionssperrschicht (25), die aus einem anderen Baumaterial hergestellt ist, getrennt ist. Hierdurch kann vorteilhaft verhindert werden, dass aufgrund der bei der Herstellung des Bauteils (14) herrschenden Temperaturen bzw. bei einer nachfolgenden Wärmebehandlung eine Diffusion von Legierungsbestandteilen zwischen dem ersten Teilvolumen (23a) und dem zweiten Teilvolumen (23b) stattfindet. Beispielsweise kann durch eine Diffusionssperrschicht (25) aus einem Nickel-Basiswerkstoff die Diffusion von Kohlenstoff zwischen den Teilvolumina (23a, 23b) aus unterschiedlichen Stählen verhindert werden.

## Beschreibung

Die Erfindung betrifft ein Verfahren zum additiven Herstellen eines Bauteils. Bei diesem Verfahren werden lagenweise Partikel mindestens zweier unterschiedlicher Baumaterialien auf eine Bauplattform oder das in Entstehung befindliche Bauteil aufgetragen (nur die erste Lage befindet sich auf der Bauplattform, die folgenden Lagen dann auf dem in Entstehung befindlichen Bauteil). Danach werden Lagen des in Entstehung befindlichen Bauteils erzeugt, indem die Partikel durch einen Energiestrahl lokal verfestigt werden.

Additive Herstellungsverfahren der eingangs angegebenen Art sind allgemein bekannt. Als additive Fertigungsverfahren im Sinne dieser Anmeldung sollen Verfahren verstanden werden, bei denen das Material, aus dem ein Bauteil hergestellt werden soll, dem Bauteil während der Entstehung hinzugefügt wird. Dabei entsteht das Bauteil bereits in seiner endgültigen Gestalt oder zumindest annähernd in dieser Gestalt. Das Baumaterial ist pulverförmig, wobei durch das additive Fertigungsverfahren das Material zur Herstellung des Bauteils physikalisch durch Einbringung von Wärme verfestigt wird. Das Verfestigen kann durch Aufschmelzen oder Sintern erfolgen.

Um das Bauteil herstellen zu können, werden das Bauteil beschreibende Daten (CAD-Modell) für das gewählte additive Fertigungsverfahren aufbereitet. Die Daten werden in Anweisungen für die Fertigungsanlage umgewandelt, damit in dieser die geeigneten Prozessschritte zur sukzessiven Herstellung des Bauteils ablaufen können.

Als Beispiele für das additive Fertigen können das selektive Lasersintern (auch SLS für Selective Laser Sintering), das Selektive Laserschmelzen (auch SLM für Slective Laser Melting) und das Elektronenstrahlschmelzen (auch EBM für Electrone Beam Melting) genannt werden. Diese Verfahren eignen sich insbesondere zur Verarbeitung von metallischen Werkstoffen in Form von Pulvern, mit denen Konstruktionsbauteile hergestellt werden können.

Beim SLM, SLS und EBM werden die Bauteile lagenweise vorzugsweise in einem Pulverbett hergestellt. Diese Verfahren werden daher auch als pulverbettbasierte additive Fertigungsverfahren bezeichnet. Es wird jeweils eine Lage des Pulvers in dem Pulverbett erzeugt, die durch die Energiequelle (Laser oder Elektronenstrahl) anschließend in denjenigen Bereichen lokal aufgeschmolzen oder gesintert wird, in denen das Bauteil entstehen soll. So wird das Bauteil sukzessive lagenweise erzeugt und kann nach Fertigstellung dem Pulverbett entnommen werden.

Für das SLS ist charakteristisch, dass die Pulverteilchen bei diesen Verfahren nicht vollständig aufgeschmolzen werden. Beim SLS wird bei Wahl der Sintertemperatur darauf geachtet, dass diese unterhalb der Schmelztemperatur der Pulverpartikel liegt. Demgegenüber liegt beim SLM und LMD der Energieeintrag betragsmäßig bewusst so hoch, dass die Pulverpartikel vollständig aufgeschmolzen werden.

In M. Ott, "Multimaterialverarbeitung bei der additiven strahl- und pulverbettbasierten Fertigung", einer am 14.02.2012 an der Technischen Universität München eingereichten Dissertation, wird ein mögliches Verfahren vorgestellt, wie bei der pulverbettbasierten additiven Fertigung verschiedene Baumaterialien verarbeitet werden können. Zu diesem Zweck wird das Baumaterial mittels einer geeigneten Dosiereinrichtung ortsaufgelöst zugeführt. Dies bedeutet, dass die Dosiereinrichtung verschiedene Teilbereiche der aktuell herzustellenden Lage direkt adressieren kann und dort eines von mehreren Baumaterialien ablegen kann. Das Auflösungsvermögen bei der Ortsauflösung hängt von der Dosiergenauigkeit und der kleinsten möglichen Dosiermenge der Dosiereinrichtung ab, wobei das abgelegte Material einer Lage entweder nacheinander für jede abgelegte Materialart oder gemeinsam für alle Materialarten durch den Laserstrahl verfestigt werden kann. Das Verfestigen erfolgt je nach eingebrachter Energiemenge durch Aufschmelzen der Partikel der Baumaterialien oder durch deren Versinterung, wenn ein Energieeintrag gewählt wird, der zu einer Erwärmung auf Temperaturen unterhalb des Schmelzpunkts des Baumaterials führt. Als Energiestrahl kommt hierbei vorzugsweise ein Laserstrahl oder ein Elektronenstrahl zum Einsatz.

Die Aufgabe der Erfindung liegt darin, bei einem Verfahren zum additiven Herstellen eines Bauteils aus mehreren Baumaterialien den Gestaltungsspielraum für die zu erzeugenden Bauteile hinsichtlich Konstruktion und Materialwahl zu vergrößern.

Diese Aufgabe wird mit dem eingangs angegebenen Verfahren erfindungsgemäß dadurch gelöst, dass ein erstes Teilvolumen des Bauteils aus einem ersten Baumaterial hergestellt wird, ein zweites Teilvolumen des Bauteils aus einem zweiten Baumaterial hergestellt wird und ein drittes Teilvolumen des Bauteils als Diffusionssperrschicht aus einem dritten Baumaterial hergestellt wird, wobei sich die Diffusionssperrschicht zwischen dem ersten Teilvolumen und dem zweiten Teilvolumen erstreckt. Die Diffusionssperrschicht hat in dem fertiggestellten Bauteil die Funktion, dass eine Diffusion von Bestandteilen aus dem ersten Baumaterial und/oder aus dem zweiten Baumaterial in das jeweils andere Baumaterial unterbunden wird. Hierdurch entsteht vorteilhaft ein größerer Gestaltungsspielraum hinsichtlich der Materialwahl für das erste Baumaterial und das zweite Baumaterial, da eine Diffusion von Legierungsbestandteilen zwischen den beiden Teilbereichen des fertiggestellten Bauteils (also dem ersten Teilvolumen und dem zweiten Teilvolumen) unterbunden wird. Beispielsweise kann das erste Teilvolumen und das zweite Teilvolumen des Bauteils aus artfremden Stählen, wie z. B. einem ferritischen Stahl und einem aus einem austenitischen Stahl gefertigt werden. Eine Kohlenstoffdiffusion zwischen den beiden Teilvolumina wird durch die Diffusionssperrschicht verhindert. Daher kann eine lokale Entkohlung an der Grenzfläche zwischen den beiden Teilvolumina verhindert werden.

Als Nickel-Basiswerkstoff im Sinne der Anmeldung sind alle Nickel-Legierungen zu verstehen, welche Nickel als hauptsächlichen Legierungsbestandteil (> 50 Gew.-%) enthalten. Als Nickel-Basiswerkstoff soll auch ein Werkstoff verstanden werden, der vollständig aus Nickel besteht. Die Dicke der Diffusionssperrschicht muss im Sinne ihrer Funktion gewählt werden, und hängt von den Legierungsbestandteilen ab, deren Diffusion verhindert werden soll. Die minimale Dicke der Diffusionssperrschicht entspricht dem mittleren Partikeldurchmesser der verwendeten Partikel des dritten Baumaterials. Die Dicke der Diffusionssperrschicht kann außerdem in einer Lage oder in mehreren Lagen des additiven Fertigungsverfahrens hergestellt werden. Deswegen kann die Diffusionssperrschicht auch nicht dünner sein, als die minimal herstellbare Lagendicke beim Aufbringen des dritten Baumaterials.

Die Verwendung einer Diffusionssperrschicht verringert zum einen die Diffusion der kritischen Legierungsbestandteile während der additiven Herstellung des Bauteils, wobei die lokale Erwärmung des Bauteils bis zum Schmelzpunkt oder darüber erfolgen kann und eine Diffusion auch in der auf das Schmelzen nachfolgenden Abkühlung des Bauteils noch möglich ist. Insbesondere ermöglicht es die Diffusionssperrschicht aber auch, dass das fertiggestellte Bauteil thermisch nachbehandelt werden kann, ohne dass es zu einer Diffusion der kritischen Legierungsbestandteile kommt. Das Bauteil kann vorteilhaft deswegen beispielsweise einer Wärmebehandlung zur Verringerung der Eigenspannungen unterzogen werden, wodurch auch komplexere Bauteile hergestellt werden können und ein spannungsbedingter Verzug durch die Nachbehandlung abgebaut werden kann. Dies erhöht den konstruktiven Gestaltungsspielraum für additiv hergestellte Bauteile.

Ist im Zusammenhang mit dieser Anmeldung von dem ersten Teilvolumen oder dem zweiten Teilvolumen die Rede, so ist immer eines der beiden Teilvolumina gemeint, die diesseits und jenseits der Diffusionssperrschicht liegen. Ist eine Unterscheidung nicht wichtig, so ist im Zusammenhang dieser Anmeldung lediglich von einem Teilvolumen die Rede, wobei dieses das erste oder das zweite Teilvolumen sein kann.

Auch das Baumaterial wird unterschieden zwischen einem ersten Baumaterial für das erste Teilvolumen, einem zweiten Baumaterial für das zweite Teilvolumen und einem dritten Baumaterial für die Diffusionssperrschicht. Ist im Zusammenhang dieser Anmeldung lediglich von einem Baumaterial die Rede, so ist eine Unterscheidung zwischen erstem, zweitem und drittem Baumaterial in diesem Kontext nicht erforderlich und es ist eines dieser Baumaterialien gemeint.

Selbstverständlich kann das Bauteil auch weitere Teilvolumina aufweisen, die aus weiteren Baumaterialien bestehen.

Die notwendige Dicke der Diffusionssperrschicht kann bei Kenntnis des Materials der Diffusionssperrschicht und dem Bestandteil (also dem chemischen Element oder der chemischen Verbindung), dessen Diffusion in das jeweils andere Teilvolumen verhindert werden soll, ermittelt werden. Dabei ist auf den maximalen Diffusionsweg des entsprechenden Bestandteils in dem Material der Diffusionssperrschicht abzustellen. Der maximale Diffusionsweg kann auch von der Länge der thermischen Beanspruch abhängen, der sowohl durch die beim additiven Herstellen herrschenden Temperaturen als auch durch den Verlauf einer Nachbehandlung vorgegeben sein kann. Die thermische Beanspruchung beim additiven Herstellungsverfahren wird einmal durch den Energieeintrag des Energiestrahls, aber auch durch eine eventuelle Temperierung der Bauteilumgebung, wie z. B. dem Pulverbett, bestimmt. Auch die Verfahrensführung einer eventuellen thermischen Nachbehandlung, d. h. die Dauer der Nachbehandlung und das Temperaturniveau dieser Wärmebehandlung, können den Diffusionsweg beeinflussen. Zum Schluss kann auch eine Betriebstemperatur und eine Betriebsdauer des Bauteils im geplanten Einsatz Berücksichtigung finden, um den maximalen Diffusionsweg zu ermitteln. Um eine vollständige Diffusionssperre durch die Diffusionssperrschicht zu erreichen, muss diese Diffusionssperrschicht hinsichtlich ihrer Dicke dem maximalen Diffusionsweg mindestens entsprechen. Allerdings kann es für bestimmte Anwendungsfälle auch ausreichen, die Diffusion von Bestandteilen zwischen den Teilvolumina nicht vollständig, sondern nur weitgehend zu verhindern. In diesem Fall kann die Dicke der Diffusionssperrschicht auch beispielsweise bei über 90 % oder über 80 % des maximalen Diffusionswegs des entsprechenden Bestandteils liegen.

Gemäß einer vorteilhaften Ausgestaltung der Erfindung ist vorgesehen, dass die Diffusionssperrschicht zumindest in einem Teilabschnitt eben verläuft und in diesem Teilabschnitt durch eine oder mehrere Lagen hergestellt wird, wobei diese Lagen parallel zum Verlauf dieses Teilabschnitts der Diffusionssperrschicht ausgerichtet sind. Mit anderen Worten wird die Ausrichtung der einzelnen Lagen des herzustellenden Bauteils unter Berücksichtigung des Verlaufs der Diffusionssperrschicht gewählt, wobei dies zur Folge hat, dass die Herstellung des Bauteils mit dem ersten Teilvolumen, der Diffusionssperrschicht und dem zweiten Teilvolumen vereinfacht wird. Eine derartige Gestaltung ist insbesondere bei flachen Bauteilen mit einer ebenen Oberfläche möglich, wenn die Oberfläche im Wesentlichen durch das zweite Teilvolumen als Schicht ausgebildet ist, während das erste Teilvolumen des Bauteils im Inneren liegt. Mit anderen Worten ist in diesem Fall vorteilhaft vorgesehen, dass das erste Teilvolumen einen Kern des Bauteils bildet und das zweite Teilvolumen eine Schicht bildet, die den Kern zumindest teilweise umgibt. Die Schicht selbst muss nicht zwangsläufig die Oberfläche des Bauteils bilden, sondern kann ihrerseits wiederum beschichtet sein, wobei die folgende Schicht durch das additive Fertigungsverfahren oder ein anderes Beschichtungsverfahren aufgebracht werden kann.

Gemäß einer weiterführenden Ausgestaltung der Erfindung ist vorgesehen, dass die herzustellenden Lagen jeweils vollständig im ersten Teilvolumen oder in der Diffusionssperrschicht oder im zweiten Teilvolumen liegen. Hierdurch wird die Fertigung weiter vereinfacht, weil jede der herzustellenden Lagen genau ein Baumaterial enthält. Ein solches Verfahren kann vorteilhaft in vergleichsweise einfach aufgebauten Anlagen für das additive Herstellen durchgeführt werden, wobei in der Anlage lediglich ein Materialwechsel vorgenommen werden muss, wenn die entsprechende Lage aus einem neuen Baumaterial an der Reihe ist, hergestellt zu werden. Dabei kann das Baumaterial vollständig, also inklusive des im Pulverbett befindlichen und nicht aufgeschmolzenen Baumaterials gewechselt werden, damit dieses sortenrein bleibt und für spätere Herstellungsgänge noch verwendet werden kann. Alternativ ist es auch möglich, eine Vermischung von Baumaterial im Pulverbett zuzulassen und nur im Bereich der herzustellenden Lagen des Bauteils dafür zu sorgen, dass hier das Baumaterial sortenrein vorliegt.

Gemäß einer alternativen Ausgestaltung der Erfindung ist vorgesehen, dass zumindest in einem Teil der herzustellenden Lagen mindestens zwei der verwendeten Baumaterialien ortsaufgelöst aufgetragen werden. Vorzugsweise kann dieses ortsaufgelöste Auftragen von Baumaterial mit einer Dosiervorrichtung erfolgen, wie diese eingangs bereits beschrieben wurde. Hierbei ist es vorteilhaft möglich, innerhalb einer Lage auch gleichzeitig oder nacheinander Teilbereiche des ersten Teilvolumens und/oder des zweiten Teilvolumens und/oder des dritten Teilvolumens herzustellen. Sollen diese Teilbereiche in einem Arbeitsgang hergestellt werden, so werden die unterschiedlichen Baumaterialien ortsaufgelöst und über die vollständige Fläche der Lage aufgebracht, so dass die Lage in den Teilbereichen aus unterschiedlichem Baumaterial besteht. Dieses wird anschließend mit dem Energiestrahl verfestigt, wobei eventuell für die unterschiedlichen Baumaterialien unterschiedliche Verfahrensparameter gewählt werden können (Energiedichte des Energiestrahls, Schreibgeschwindigkeit des Energiestrahls in der herzustellenden Lage).

Alternativ ist es auch möglich, nacheinander erst eines der Baumaterialien ortsaufgelöst aufzubringen und zu verfestigen und anschließend nach dem Entfernen von überschüssigem Baumaterial das nächste der Baumaterialien ortsaufgelöst in Teilbereichen der Lage aufzubringen, wo noch kein Baumaterial verfestigt wurde und dieses anschließend zu verfestigen. Anschließend kann auch noch ein weiteres der Baumaterialien aufgebracht und verfestigt werden, wie dies vorstehend schon beschrieben wurde, und so weiter.

Eine besondere Ausgestaltung der Erfindung wird erhalten, wenn das Bauteil in einem Pulverbett erzeugt wird und vor einem Wechsel des Baumaterials das bestehende Pulverbett mit einer Maske abgedeckt wird. Diese Maske muss so ausgebildet sein, dass die herzustellende Lage es Bauteils freibleibt. Mit der Maske wird damit nur derjenige Teil der Oberfläche des Pulverbetts abgedeckt, der nicht zur Herstellung des Bauteils verfestigt werden soll. Der Vorteil liegt darin, dass weiteres aufgebrachtes Baumaterial einer anderen Art auf dem in Entstehung befindlichen Bauteil verfestigt werden kann und in Bereichen, wo dies nicht geplant ist, das lose Baumaterial durch die Maske von dem vorher verwendeten Baumaterial getrennt wird. Daher kann es nicht zu einer Vermischung der Baumaterialien kommen und es muss daher das vorher verwendete Baumaterial nicht aus dem Pulverbehälter entfernt werden.

Weitere Einzelheiten der Erfindung werden nachfolgend anhand der Zeichnungen erläutert, wobei gleiche oder sich entsprechende Zeichnungselemente in den Figuren nur insoweit mehrfach erläutert werden, wie sich Unterschiede zwischen den einzelnen Figuren ergeben. Es zeigen:
- Figur 1: eine Anlage zur Durchführung eines selektiven Laserschmelzens, mit der ein Ausführungsbeispiel des erfindungsgemäßen Verfahrens durchgeführt werden kann, im Schnitt,
- Figur 2 bis 5: ausgewählte Schritte eines Ausführungsbeispiels des erfindungsgemäßen Verfahrens geschnitten,
- Figur 6: ein anderes Ausführungsbeispiel des erfindungsgemäßen Verfahrens als Seitenansicht und
- Figur 7: einen Ausschnitt eines Bauteils, welches mit dem in Figur 6 gezeigten Ausführungsbeispiel des erfindungsgemäßen Verfahrens hergestellt werden kann.

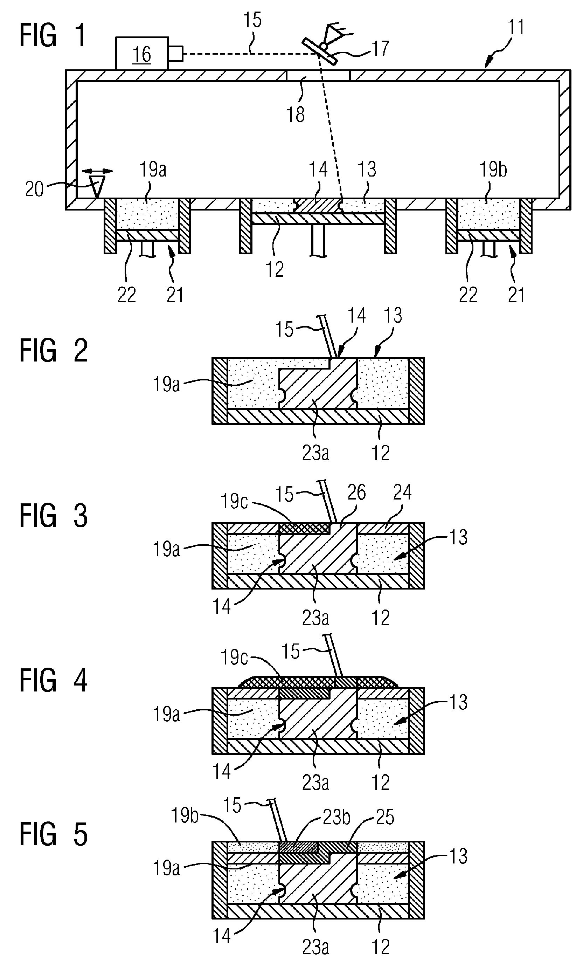

In Figur 1 ist eine Anlage zum Laserschmelzen dargestellt. Diese weist eine Prozesskammer 11 auf, in der eine absenkbare Bauplattform 12 zur Herstellung eines Pulverbetts 13 vorgesehen ist. Auf der Bauplattform 12 kann ein Bauteil 14 hergestellt werden, indem ein Energiestrahl 15 in Form eines Laserstrahls von einem Laser 16 erzeugt und über einen Umlenkspiegel 17 durch ein Fenster 18 in der Prozesskammer 11 auf das Bauteil 14 gerichtet wird.

Die Herstellung des Bauteils 11 erfolgt lagenweise, wobei zu diesem Zweck die Bauplattform 12 sukzessive abgesenkt werden kann. Ein erstes Baumaterial 19a oder ein zweites Baumaterial 19b können mittels eines Abstreifers 20, der in Richtung des dargestellten Doppelpfeils waagerecht verschiebbar ist, zur lagenweisen Befüllung des Pulverbetts 13 dosiert werden. Das Baumaterial 19a, 19b ist zu diesem Zweck jeweils in einem Pulvervorrat 21 untergebracht, wobei ein axial verschiebbarer Dosierzylinder 22 die von dem Abstreifer 20 zu transportierende Pulvermenge vorgibt. Ein drittes Baumaterial kann in einem nicht dargestellten Pulvervorrat untergebracht sein, der sich hinter der Zeichenebene befindet und durch einen nicht dargestellten Abstreifer rechtwinklig zu dem Doppelpfeil des dargestellten Abstreifers 20 dosiert werden kann. In Figur 2 ist dargestellt, wie das Bauteil 14 zunächst mit einem ersten Teilvolumen 23a aus dem ersten Baumaterial 19a in mehreren Lagen hergestellt werden kann. Die aktuelle Lage befindet sich gerade in Herstellung, wobei der Energiestrahl 15 bereits die Lage bereits hergestellt hat und sich oberhalb des restlichen Bauteils 14 noch das Baumaterial 19a befindet. Das Pulverbett 13, wie in Figur 2 dargestellt, könnte beispielsweise in einer Anlage gemäß Figur 1 enthalten sein. Dargestellt sind allerdings lediglich die Bauplattform 12 und die seitlichen Begrenzungen des Pulverbetts 13.

In Figur 3 ist dargestellt, wie das Pulverbett 13 mit einer Maske 24 aus Stahlblech abgedeckt wurde, wobei in der Maske 20 eine Öffnung vorgesehen ist, die genau dem Querschnitt des in Herstellung befindlichen Bauteils 14 entspricht (und zwar dem Querschnitt, der der herzustellenden Lage des Bauteils entspricht). Außerdem ist dargestellt, dass innerhalb der Maskenöffnung ein drittes Baumaterial 19c aufgebracht wurde, welches mittels des Energiestrahls 15 verfestigt wird. Hierdurch entsteht eine dünne Schicht auf dem Bauteil 14, welche später eine Diffusionssperrschicht 25 ausbildet (vgl. Figur 5). Das Baumaterial 19c befindet sich allerdings nicht auf einem Absatz 26, der bereits gemäß Figur 2 hergestellt wurde.

Um die Diffusionssperrschicht 25 zu komplettieren, muss daher gemäß Figur 4 auf der Maske 24 eine weitere Lage des Baumaterials 19c aufgebracht werden, die lediglich oberhalb des Absatzes 26 gemäß Figur 3 verfestigt wird. Überschüssiges Baumaterial 19c wird anschließend von der Maske 24 entfernt (z. B. abgesaugt).

In Figur 5 ist zu erkennen, dass anschließend auf die Maske 24 das zweite Baumaterial 19b aufgebracht und mittels des Energiestrahls 15 verfestigt wird. Hierdurch entsteht ein zweites Teilvolumen 23b, von dem gemäß Figur 5 nur die erste Lage hergestellt ist, welches in nicht dargestellten nachfolgenden Fertigungsschritten aber komplettiert werden kann, so dass das vollständige Bauteil 14 entsteht.

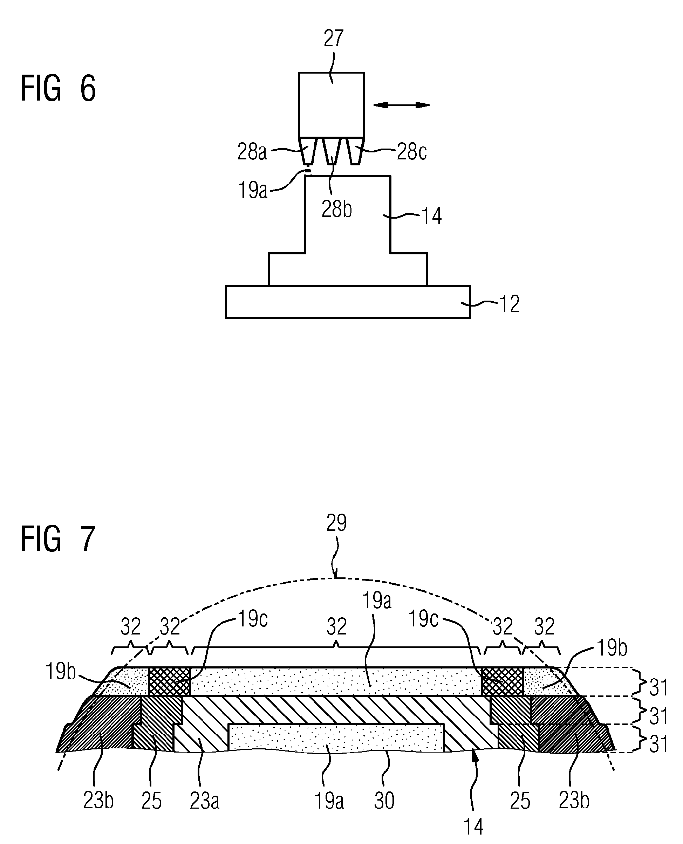

In Figur 6 ist dargestellt, dass das Baumaterial auch mit einer Dosiervorrichtung 27 auf das Bauteil 14 aufgebracht werden kann. Bei diesem Verfahren wird das Baumaterial nur auf das in Entstehung befindliche Bauteil 14 aufgebracht, welches selbst nicht von einem Pulverbett umgeben ist. Die Dosiervorrichtung 27 kann selbstverständlich auch bei einem Pulverbett verwendet werden (nicht dargestellt). Die Dosiervorrichtung 27 enthält in nicht dargestellter Weise mehrere Vorratsbehälter für das erste Baumaterial 19a, welches gerade über einen ersten Dosiertrichter 28a dosiert wird und jeweils für das zweite Baumaterial und das dritte Baumaterial, welche jeweils über die Dosiertrichter 28b und 28c dosiert werden können. Auf diese Weise ist es auch möglich, eine Lage auf dem Bauteil 14 herzustellen, die ortsaufgelöst unterschiedliche Baumaterialien enthält, wie dies am Beispiel von Figur 7 näher erläutert werden kann.

In Figur 7 ist ein Bauteil 14 dargestellt, welches sich gerade in Herstellung befindet. Dieses Bauteil 14 soll eine gewölbte Kontur 29 aufweisen, wenn es fertiggestellt ist. Dargestellt sind exemplarisch oberhalb einer Bruchlinie 30 drei Lagen 31 des Bauteils 14. Da die Kontur 29 gekrümmt ist, schneidet infolgedessen die Diffusionssperrschicht 25 alle der dargestellten Lagen 31 und auch die darüber und darunter liegenden, nicht dargestellten Lagen.

Das erste Teilvolumen 23a bildet einen Kern des Bauteils 14, wobei dieser hohl ist und infolgedessen während der Herstellung noch mit dem ersten Baumaterial 19a gefüllt ist. Dieses kann durch eine nicht dargestellte Öffnung nach Herstellung des Bauteils 14 entfernt werden. Das zweite Teilvolumen 23b bildet eine Oberflächenschicht des Bauteils 14 und wird wegen der gewölbten Kontur 29 des Bauteils ebenfalls durch alle Lagen 31 gebildet.

Die oberste der dargestellten Lagen 31 ist noch nicht verfestigt worden. Dadurch, dass durch diese Lage jeweils ein Teil des ersten Teilvolumens 23a, des zweiten Teilvolumens 23b und der Diffusionssperrschicht 25 gebildet werden soll, ist diese Lage 31 in mehreren Teilabschnitten 32 ausgebildet. Diese Teilabschnitte 32 unterscheiden sich jeweils darin, dass entweder das erste Baumaterial 19a zur Herstellung des ersten Teilvolumens 23a, das zweite Baumaterial 19b zur Herstellung des zweiten Teilvolumens 23b oder das dritte Baumaterial 19c zur Herstellung der Diffusionssperrschicht 25 vorgesehen wird. Dies kann mit der Dosiervorrichtung 27 gemäß Figur 6 durchgeführt werden. Anschließend kann mittels eines nicht dargestellten Energiestrahls die komplette oberste Lage 31 verfestigt werden.

Alternativ (nicht dargestellt) könnten die Teilabschnitte 32 aus demselben Baumaterial auch jeweils einzeln in der Lage 31 platziert werden und anschließend jeweils durch den Energiestrahl verfestigt werden. Erst wenn das Baumaterial der einen Art vollständig verfestigt wurde, wird bei dieser Variante das nächste Baumaterial in der Lage platziert.

## Patentansprüche

1. Verfahren zum additiven Herstellen eines Bauteils (14), bei dem
• lagenweise Partikel mindestens zweier unterschiedlicher Baumaterialien auf eine Bauplattform (12) oder das in Entstehung befindliche Bauteil (14) aufgetragen werden und
• Lagen (31) des in Entstehung befindlichen Bauteils (14) erzeugt werden, indem die Partikel durch einen Energiestrahl (15) lokal verfestigt werden,
**dadurch gekennzeichnet,**
**dass**
• ein erstes Teilvolumen (23a) des Bauteils (14) aus einem ersten Baumaterial (19a) hergestellt wird,
• ein zweites Teilvolumen (23b) des Bauteils (14) aus einem zweiten Baumaterial (19b) hergestellt wird und
• ein drittes Teilvolumen des Bauteils als Diffusionssperrschicht (25) aus einem dritten Baumaterial (19c) hergestellt wird, wobei die Diffusionssperrschicht (25) zwischen dem ersten Teilvolumen (23a) und dem zweiten Teilvolumen (23b) liegt.

2. Verfahren nach Anspruch 1,
**dadurch gekennzeichnet,**
**dass** die Diffusionssperrschicht (25) zumindest in einem Teilabschnitt eben verläuft und in diesem Teilabschnitt durch eine oder mehrere Lagen hergestellt wird, wobei diese Lagen parallel zum Verlauf dieses Teilabschnitts der Diffusionssperrschicht (25) ausgerichtet sind.

3. Verfahren nach Anspruch 2,
**dadurch gekennzeichnet,**
**dass** die herzustellenden Lagen (31) jeweils vollständig im ersten Teilvolumen (23a) oder in der Diffusionssperrschicht (25) oder im zweiten Teilvolumen (23b) liegen.

4. Verfahren nach Anspruch 1,
**dadurch gekennzeichnet,**
**dass** zumindest in einem Teil der herzustellenden Lagen (31) mindestens zwei der verwendeten Baumaterialien (19a, 19b, 19c) ortsaufgelöst aufgetragen werden.

5. Verfahren nach Anspruch 4,
**dadurch gekennzeichnet,**
**dass** das Auftragen der Baumaterialien (19a, 19b, 19c) mit einer Dosiervorrichtung (27) ortsaufgelöst durchgeführt wird.

6. Verfahren nach Anspruch 4,
**dadurch gekennzeichnet,**
**dass** das Auftragen der Baumaterialien (19a, 19b, 19c) für die herzustellende Lage (31) nacheinander erfolgt, wobei jeweils die ganze Lage (31) mit dem jeweiligen Baumaterial (19a, 19b, 19c) ausgefüllt wird und überschüssiges Baumaterial (19a, 19b, 19c) nach dem Verfestigen von dem in Entstehung befindlichen Bauteil (14) entfernt wird.

7. Verfahren nach einem der voranstehenden Ansprüche,
**dadurch gekennzeichnet,**
**dass** das Bauteil (14) in einem Pulverbett (13) erzeugt wird und bei einem Wechsel des Baumaterials (19a, 19b, 19c) auch das im Pulverbett (13) befindliche Baumaterial (19a, 19b, 19c) ausgewechselt wird.

8. Verfahren nach einem der Ansprüche 1 bis 7,
**dadurch gekennzeichnet,**
**dass** das Bauteil (14) in einem Pulverbett (13) erzeugt wird und vor einem Wechsel des Baumaterials (19a, 19b, 19c) das bestehende Pulverbett mit einer Maske (24) abgedeckt wird.

9. Verfahren nach einem der voranstehenden Ansprüche,
**dadurch gekennzeichnet,**
**dass** das erste Teilvolumen (23a) einen Kern des Bauteils (14) bildet und das zweite Teilvolumen (23b) eine Schicht bildet, die den Kern zumindest teilweise umgibt.

10. Verfahren nach einem der voranstehenden Ansprüche,
**dadurch gekennzeichnet,**
**dass** das erste Baumaterial (19a) und/oder das zweite Baumaterial (19b) aus einem Stahl besteht/bestehen und die Diffusionssperrschicht eine Diffusion von Kohlenstoff verhindert.

11. Verfahren nach Anspruch 10
**dadurch gekennzeichnet,**
**dass** das erste Baumaterial (19a) ein ferritischer Stahl ist.

12. Verfahren nach einem der Ansprüche 10 oder 11
**dadurch gekennzeichnet,**
**dass** das zweite Baumaterial (19b) ein austenitischer Stahl ist.

13. Verfahren nach einem der Ansprüche 10 bis 12,
**dadurch gekennzeichnet,**
**dass** das dritte Baumaterial (19c) ein Nickel-Basiswerkstoff ist.
